Europäisches Patentamt

**European Patent Office**

**Office européen des brevets**

(11) Numéro de publication: **0 058 581**
**B1**

(12) **FASCICULE DE BREVET EUROPEEN**

(45) Date de publication du fascicule du brevet:
11.09.85

(51) Int. Cl.⁴: **G 21 C 17/00**, G 21 C 7/36

(21) Numéro de dépôt: **82400065.7**

(22) Date de dépôt: **14.01.82**

(54) Procédé et dispositif de contrôle de la puissance dans un réacteur nucléaire, utilisant des détecteurs de rayonnement gamma.

(30) Priorité: **30.01.81 US 229797**

(43) Date de publication de la demande:
**25.08.82 Bulletin 82/34**

(45) Mention de la délivrance du brevet:
**11.09.85 Bulletin 85/37**

(84) Etats contractants désignés:
**BE DE FR GB IT SE**

(56) Documents cités:
**FR - A - 2 110 381**
**FR - A - 2 420 827**
**US - A - 3 565 760**
**US - A - 3 752 735**

**POWER REACTOR TECHNOLOGY, sec. III, vol. 9, no. 1, 1965 Washington (US) G.F. POPPER: "Measuring Neutron-Flux Distribution in operating Reactors", pages 25-34**

(73) Titulaire: **ELECTRICITE DE FRANCE Service National, 2, rue Louis Murat, F-75008 Paris (FR)**

(72) Inventeur: **Smith, Robert D., 9211 Bardon Road, Bethesda Maryland 20013 (US)**

(74) Mandataire: **Fort, Jacques et al, CABINET PLASSERAUD 84, rue d'Amsterdam, F-75009 Paris (FR)**

## Description

L'invention concerne le domaine du contrôle ou de la surveillance de la densité de puissance dans un réacteur nucléaire de puissance, notamment dans le but d'analyser les performances des éléments de combustible.

Avant de décrire l'invention, on rappellera que la défaillance des éléments de combustible, notamment sous forme de rupture de gaine, est un facteur de coût dans le fonctionnement des centrales nucléaires de puissance et a créé le besoin d'un système fonctionnant en ligne pour éviter les ruptures de gaine, système permettant (a) de surveiller en permanence l'état de tous les éléments de combustible, (b) d'analyser les données fournies par la surveillance et (c) de déduire de cette analyse des prévisions de rupture de gaine.

Pour remplir cette fonction d'analyse dans les systèmes destinés à éviter les ruptures des gaine, il a fallu créer un modèle de rupture à partir duquel on peut calculer la fréquence attendue de ruptures de gaine dans des réacteurs de puissance commerciaux. L'un de ces modèles est basé sur le postulat que les ruptures résultent surtout d'une interaction entre pastilles et gaine. Les expériences ont montré que les ruptures dues à cette interaction se produisent soit au cours des accroissements rapides de puissance, que l'on appelle »chocs de puissance«, soit pendant les quelques heures qui suivent. Les chocs de puissance provoquent une expansion thermique, une libération de gaz de fission et une distorsion des pastilles de combustible qui provoque des contraintes de la gaine et une fissuration longitudinale du gainage de l'élément de combustible. La déformation des pastilles provoque aussi une localisation axiale des contraintes aux joints entre pastilles. On pense que d'autres facteurs encore liés à l'interaction pastilles-gaine ont une responsabilité dans les ruptures de gaire, mais tous ces facteurs sont des conséquences des chocs de puissance.

Il est donc essentiel de surveiller continuellement et de façon précise la densité de puissance dans les éléments de combustible pour pouvoir détecter les chocs de puissance et, grâce à un modèle de rupture, fournier, à l'exploitant de la centrale, les informations nécessaires pour commander la répartition de puissance. Cette commande s'effectue par déplacement des barres de commande et/ou par réglage du débit de réfrigérant dans un réacteur à eau bouillante; elle s'effectue par déplacement des barres de commande et/ou par commande de la concentration en bore dans le modérateur d'un réacteur à eau sous pression.

On contrôle ou mesure la densité de puissance dans le réacteur à l'aide de détecteurs placés dans les assemblages de combustible. Pour cela, on a essentiellement utilisé jusqu'ici des détecteur du type à flux de neutrons thermique. Si ces détecteurs ont l'avantage de fournir un signal de mesure de puissance qui réagit rapidement aux changements de densité de puissance locale, ils sont peu satisfaisants à deux points de vue importants. Tout d'abord, le signal de mesure de puissance fourni par un détecteur de flux neutronique n'est pas directement relié au taux de génération de chaleur linéaire de l'élément de combustible, de sorte qu'il faut introduire divers facteurs de calibrage et de correction pour faire une approximation de la relation complète réelle. Et le détecteur de flux neutronique comporte un émetteur qui est sujet à usure ou épuisement.

Le document FR-A-2 420 827 de l'organisme demandeur décrit un détecteur de densité de puissance locale qui par contre lui fournit un signal de sortie directement relié au taux de génération thermique linéaire des éléments de combustible et permet une détermination de ce paramètre beaucoup plus precise que celle obtenue à l'aide des détecteurs à flux neutronique. De plus, le détecteur décrit dans ce document, étant du type à génération de chaleur sous l'action du rayonnement gamma, il n'a pas d'émetteur sujet à usure. En contrepartie, le détecteur de rayonnement gamma a une réponse aux changements de puissance plus lente qu'un détecteur de flux neutronique, ce qui va à l'encontre de l'exigence de mesure de puissance locale dans le combustible en temps réel requise dans un système destiné à éviter les ruptures de gaine.

La présente invention vise notamment à fournier un procédé et un dispositif grâce auxquels l'exploitant d'une centrale nucléaire de puissance peut avoir une connaissance en temps réel, extrêmement précise, des taux de génération locale de puissance dans le coeur du réacteur; cette connaissance permet de faire fonctionner la centrale dans des marges adéquates en ce qui concerne les paramètres de fonctionnement déterminés à partir des mesures de puissance locale.

L'invention vise également à fournier un procédé et un dispositif de contrôle de la puissance dissipée dans les éléments de combustible d'un réacteur nucléaire de puissance qui utilise tous les avantages des détecteur du type à rayonnement gamma, également dénommés »thermomètres gamma«.

Dans ce but, l'invention propose notamment un procédé de contrôle de la puissance dissipée dans un réacteur nucléaire à partir de signaux de mesure de puissance générés par des détecteurs en réponse aux fissions intervenant dans des groupes d'élément de combustible, procédé selon lequel on traite lesdits signaux en même temps sur plusieurs paramètres représentatifs du réacteur nucléaire de façon à produire une première représentation de la puissance calculée avec précision, susceptible d'être accidentellement interrompue par intermittence, procédé caractérisé en ce que, l'on utilise des détecteurs du type à génération interne de chaleur en réponse au rayonnement gamma dû aux fissions de sorte que les signaux de mesure issus des détecteurs ont une relation directe avec le taux de génération de puissance linéaire des éléments de combustible, que l'on soumet également lesdits signaux à un second traitement sans faire appel à des données concernant lesdits plusieurs paramètres afin de fournir une seconde représentation de la puissance, qui est cette fois continue et disponible au cours des interruptions de la première représentation de la puissance de précision et en ce qu'on calibre les signaux provenant dudit second traitement à partir de la première représentation de la puissance de précision de façon à corriger la seconde représentation continue de la puissance.

Un tel procédé permet de fournir en permanence une lecture directe ayant une précision moyenne largement suffisante pour tous les besoins courants grâce à un traitement qui peut être simple et ne fait pas appel à un logiciel et un matériel de traitement complexe, susceptible de pannes sauf utilisation de moyens ayant un degré de redondance élevé et donc coûteux. La simplicité du second traitement de précision moyenne, qui ne fait pas intervenir de calculateur, permet au personnel local de l'expoitant d'en interpréter complètement le fonctionnement et d'y faire, en cas de besoin, les interventions urgentes qui peuvent être nécessaires, alors qu'un système informatisé obligerait à faire appel à des spécialistes quelquefois éloignés.

Il faut encore remarquer que cette approche n'est possible que grâce à l'utilisation d'un détecteur dont le signal est directement représentatif de la puissance thermique, ce qui n'était pas le cas des détecteurs antérieurement utilisés.

Le procédé comporte avantageusement une étape de correction de la représentation en vue de compenser la constante de temps de réponse des détecteurs aux changements de puissance. Cette compensation peut s'effectuer de façon simple à l'aide de moyens électroniques de type bien connu, qu'il n'est donc pas nécessaire de décrire.

L'invention propose également un dispositif permettant de mettre en oeuvre le procédé ci-dessus défini, conforme à la revendication 4. Ce dispositif comporte plusieurs détecteurs de rayonnement gamma, avantageusement du genre décrit dans le document FR-A-2 420 827, qui fournissent des signaux analogiques et deux voies de traitement en parallèle permettant de fournier deux représentations de la puissance séparées et susceptibles d'être comparées. La première voie de traitement de signal (ou voie A), d'un type dont la constitution de base est bien connue, est du type de haute précision. Elle comporte un calculateur de processus qui reçoit divers paramètres de modèle et divers facteurs de correction à partir d'une mémoire de données, de façon à fournir à l'exploitant des informations précises, à partir desquelles des décisions sur la conduite de la centrale peuvent être prises pour éviter les ruptures de gaine. La seconde voie de traitement de signal (on voie B) convertit directement les signaux analogiques en une représentation de la puissance en fonction des taux de dissipation de puissance locale dans le combustible des éléments de combustible situés à proximité des détecteurs, ceci grâce à un calibrage des signaux analogiques. Dans un mode d'exécution de l'invention, les deux voies de traitement de signal comportent un filtre dynamique permettant de mettre en oeuvre un processus de déconvolution de signal afin de corriger les affichages et compenser les retards dûs à la réponse lente des détecteur aux changements de puissance. La représentation fournie en continu par la voie B de traitement direct du signal peut être comparée à la représentation de précision fournie par la voie A traitement de façon à mettre à jour le calibrage de correction. La lecture en continu fournit à l'exploitant l'information nécessaire pour éviter les arrêts de l'installation au cours des interruptions de l'affichage de précision, provoquées par l'arrêt du calculateur en vue de la mise à jour de sa mémoire ou provoquées par d'autres causes.

L'invention sera mieux comprise à la lecture de la description qui suit de modes particuliers de réalisation, donnés à titre d'exemples non limitatifs. La description se réfère aux dessins quil'accompagnent, dans lesquels:

La figure 1 est un schéma synoptique montrant la constitution de base d'un dispositif de contrôle et de surveillance de la puissance, conforme à l'invention,

la figure 2 est une représentation graphique des caractéristiques comparées du signal de divers détecteur,

la figure 3 est une représentation graphique de la correction de réponse du détecteur effectuée dans le dispositif de contrôle de puissance,

la figure 4 est un schéma synoptique d'un dispositif de contrôle de puissance constituant un mode particulier d'exécution de l'invention,

la figure 5 est une vue, en coupe partielle, d'une réalisation typique de la connexion entre câbles et détecteurs dans un dispositif suivant l'invention,

la figure 6 est un synoptique de principe montrant une variante simplificiée de l'invention.

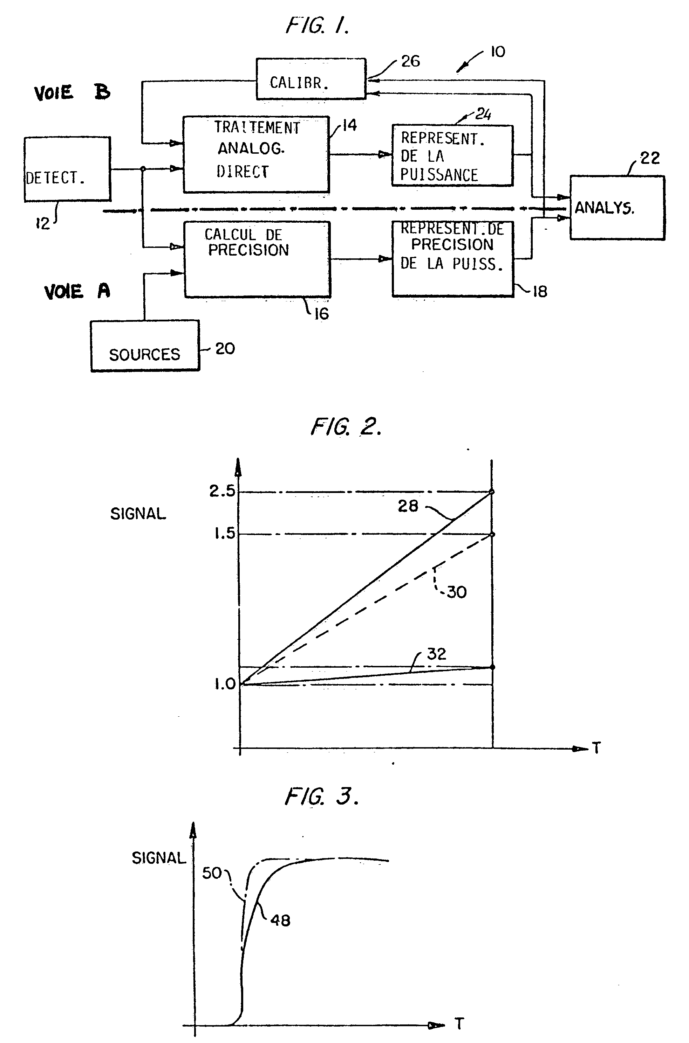

La figure 1 montre un dispositif destiné à contrôler en permanence la puissance dégagée par le combustible d'un réacteur nucléaire de puissance, dispositif désigné dans son ensemble par la référence 10. L'acquisition de données s'effectue dans le dispositif au sein du coeur de combustible du réacteur, à l'aide de plusieurs détecteurs de taux de puissance locale, désignés par la référence 12 sur la figure 1. Les signaux de sortie des détecteur sont appliqués sur deux voies parallèles:

— une première voie (A) de traitement du signal, fournissant avec précision à sa sortie une représentation de puissance 18, comportant une ligne de calcul de précision 16;

— une seconde voie (B) de traitement du signal, fournissant à sa sortie une représentation de puissance moyenne 24, comportant une ligne directe de traitement analogique du signal 14.

La ligne de calcul de précision 16 reçoit des données d'entrée à partir d'autres sources 20, qui comportent par exemple des informations calculées à partir de modèles de sensibilité des détecteurs, de modèles de choc de puissance et divers facteurs de correction tels que l'état du coeur et des corrections de domaine temporel. Dans la voie de traitement A comprenant la ligne de calcul 16, qui est en général un calculateur, les signaux de détecteur sont individuellement recalés par pré-calibrage de façon à obtenir, à partie des signaux des détecteurs, des mesures précises de taux de chaleur qui sont converties en informations de sortie représentatives de la puissance locale dégagée par le combustible, corrigées en fonction de divers paramètres d'états de la centrale à l'aide des sources de données désignées par la référence 20 sur la figure 1.

La représentation précise de puissance 18 ainsi obtenue peut être appliquée à un analyseur 22 de façon à fournir des prévisions de rupture de gaine et des recommandations de répartition de puissance dans le but d'éviter de telles ruptures.

L'analyseur 22 peut, en alternance, recevoir des signaux d'entrée provenant de la seconde voie de représentation de puissance moyenne 24 alimentée par la ligne de traitement analogique 14 en mesures du taux de puissance locale du combustible. Un dispositif de calibrage 26 est relié à la ligne de traitement de signal 14 et permet d'effectuer une correction en ligne de la représentation 24, par comparaison entre la représentation 24 et la représentation de précision 18 fourni par la première voie A lorsque la seconde voie fonctionne. On peut donc faire fonctionner en permanence la représentation 24 de façon à fournir l'information nécessaire à l'exploitant de la centrale alors que le calculateur 16 de la première voie ne fonctionne pas et on peut ainsi éviter un arrêt de la centrale causé par des interruptions dans la fourniture des données au calculateur provoquées par diverses raisons, par exemple la mise à jour des donnés.

Le type de détecteur utilisé dans le dispositif de contrôle de puissance de l'invention est essentiel et critique. Comme le montre la figure 2, les détecteurs de flux neutronique utilisés jusqu'ici ont une réponse (nivau de signal pour un taux de génération thermique linéaire constant par unité de longueur d'élément de combustible) qui évolue notablement dans le temps, comme le montre la courbe 28 qui suppose qu'il n'y a pas de compensation d'usure d'émetteur. Lorsqu'une telle compensation est prévue, l'évolution du niveau de signal du détecteur de flux neutronique est représentée par la courbe 30.

Au contraire, l'évolution de niveau pour un détecteur gamma du genre décrit dans le document FR-A-2 420 827 déjà mentionné est illustré par la courbe 32 de la figure 2, qui montre que la correction de domaine temporel requise est beaucoup moins élevée.

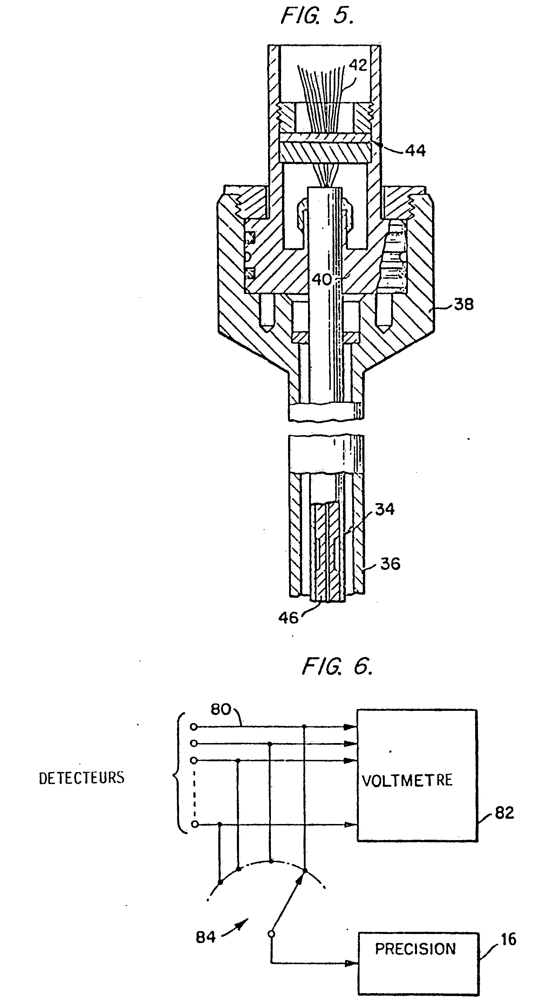

La figure 5 montre l'un des détecteurs gamme 34 qui s'étendent le long d'un tube-guide 36 depuis une installation de réacteur jusqu'à un connecteur étanche 38 placé dans une zone de retrait d'instrument, le réacteur étant par exemple du type à eau sous pression. Le détecteur traverse le connecteur d'étanchéité 40 et ses câbles de transmission de signal de thermocouple traversant le bouchon d'étanchéité 44 pour parvenir au circuit de contrôle et de surveillance de puissance. Le rayonnement gamma dû aux produits de fission dans l'assemblage de combustible du réacteur provoque un chauffage interne du coeur 46 du détecteur et génère des signaux dans les câbles de thermocouple 42. Ces signaux fournissent une indication du taux de génération thermique linéaire beaucoup plus précise que celles des détecteurs antérieurs, car ils sont directement liés à la dissipation thermique, mais ils présentent un retard de reponse en cas de changement de puissance, comme le montre la figure 3. Suivant un aspect de la présente invention, on corrige le signal pour compenser la lenteur de réponse, pour arriver à une courbe de signal de taux de chaleur après déconvolution du genre montré par la courbe 50.

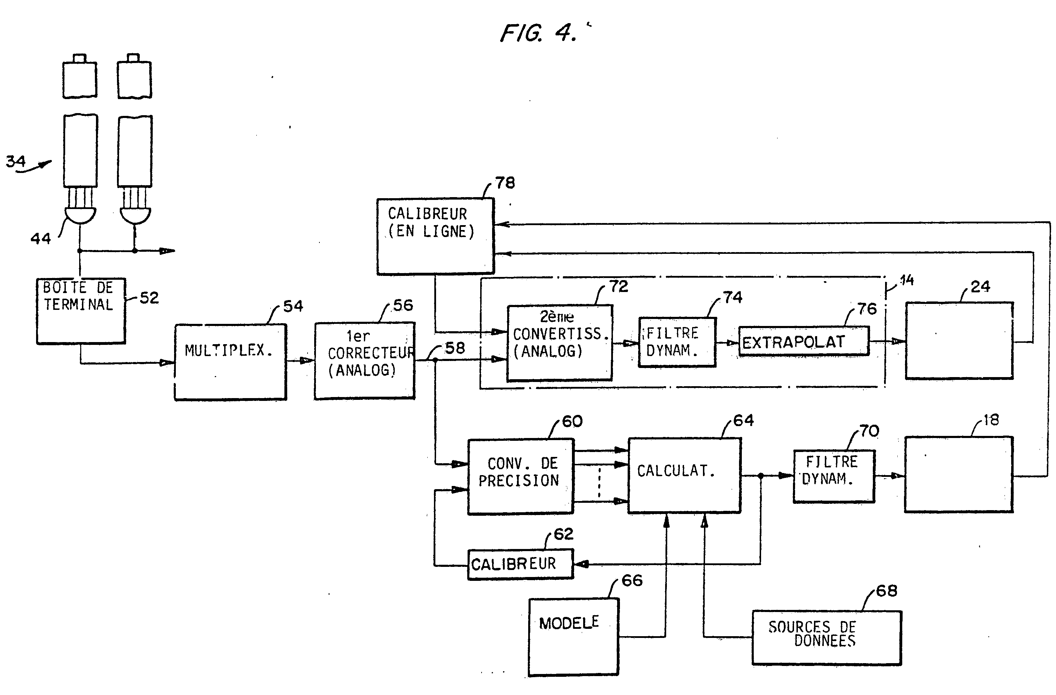

Sur la figure 4, on a représenté les câbles de transmission de signal provenant de chacun des détecteurs 34 reliés à une boîte de terminal 52 à partir de laquelle les signaux, ayant un niveau de l'ordre du millivolt, sont envoyés à un circuit de balayage ou multiplexeur 54. On a par exemple huit détecteurs 34 par assemblage de combustible du coeur et chaque détecteur est muni de deux câbles de signal, ce qui se traduit par seize câbles de signal à partir de chaque assemblage de combustible. Dans un réacteur à eau naturelle, on a 350 à 450 signaux fournissant des mesures de taux de puissance locale à transmettre de la boîte terminale 52 au multiplexer 54. Le multiplexeur peut être du type utilisant des composants à l'état solide et fournir les signaux en séquence à un premier correcteur de signal analogique 54. Dans le correcteur 56 les signaux sont calibrés et appliqués sur la voie de signal 58 sous forme de plusieurs signaux analogiques représentant les taux thermiques locaux dans les détecteurs.

La voie de signal 58 est constituée par plusieurs lignes de signal appliquées en parallèle à la ligne de traitement analogique direct et à la ligne de traitement de précision déjà mentionnées au sujet de la figure 1.

Dans la ligne de traitement de précision, les signaux analogiques d'entrée sont appliqués à un convertisseur de signal de précision 60 dans lequel les signaux sont individuellement décalés et corrigés suivant un modèle de sensibilité de signal, par l'intermédiaire du calibreur 62, de façon à obtenir des signaux de taux thermique de précision qui sont appliqués à un calculateur de processus de centrale 64 qui reçoit également des données d'entrée provenant d'une mémoire de données de modèle 66 et d'une source de données d'état de la centrale 68. Le signal de sortie du calculateur 64 est encore modifié par un filtre dynamique 70 de façon à compenser la réponse lente du signal, comme on l'a indiqué au sujet de la figure 3. Le signal de sortie est enfin appliqué à des moyens de représentation de précision 24, généralement sous forme d'un moniteur d'affichage de puissance de précision qui fournit des informations de taux de puissance locale du combustible pour chaque élément de combustible.

Les signaux de la voie 58 sont directement convertis en informations représentatives du taux de puissance locale par un second convertisseur de signal 72 de façon à fournir des sorties représentatives du taux de puissance locale du combustible dans les éléments de combustible adjacents à chacun des détecteurs. Les signaux de sortie sont modifiés par un filtre dynamique 74, puis transmis par l'intermédiaire d'un extrapolateur 76 à un moniteur d'affichage continu 24, sous forme d'une information moyenne de taux de puissance. Un calibreur 78 peut effectuer une correction de signal en ligne. On n'obtient une lecture suffisamment précise que grâce à la précision de l'information fournie par les signaux provenant des détecteur 34 et grâce aux mesures prises pour compenser la réponse lente et effectuer un calibrage en ligne, à l'aide du calibreur 78, à partir d'une comparaison avec les données fournies par le moniteur de précision 18.

La figure 6 montre une version du dispositif qui est simplifiée, du moins en ce qui concerne la voie de traitement continu du signal. Les signaux de sortie des détecteurs sont appliqués, par des lignes de signaux analogiques, directement à des voltmètres calcibrés 82. Les signaux sur les lignes 80 sont également appliqués au contact d'un système de balayage 84 à partir duquel les signaux sont appliqués en séquence à la ligne de traitement de signal de précision 16, comme cela a été décrit en faisant référence aux figures 1 et 4. Le calibrage des voltmètres 82 s'effectue par comparaison entre leurs affichages et les resultats fournis par la ligne de traitement de précision 16.

## Revendications

1. Procédé de contrôle de la puissance dissipée dans un réacteur nucléaire à partir de signaux de mesure de puissance générés par des détecteurs en réponse aux fissions intervenant dans des groupes d'éléments de combustible, procédé selon lequel on traite lesdits signaux en même temps que plusieurs paramètres représentatifs du réacteur nulcéaire de façon à produire une première représentation de la puissance calculée avec précision, mais susceptible d'être accidentellement interrompue par intermittence, procédé caractérisé en ce que, l'on utilise des détecteurs (12) du type à génération interne de chaleur en réponse au rayonnement gamma dû aux fissions, de sorte que les signaux de mesure issus des détecteurs sont en relation directe avec le taux de génération de puissance linéaire des éléments de combustible, que l'on soumet également les signaux à un second traitement, sens faire appel à des données concernant lesdits plusieurs paramètres, afin de fournir une seconde représentation de la puissance, qui est cette fois continue et disponible au cours des interruptions de la première représentation de la puissance de précision, et en ce qu'on calibre les signaux provenant dudit second traitement à partir de la première représentation de la puissance de précision de façon à corriger la représentation continue de la puissance.

2. Procédé suivant la revendication 1, caractérisé en ce qu'on calibre initialement lesdits signaux pour représenter le taux d'échauffement gamma des détecteurs et en ce qu'on les traite pour représenter la puissance dissipée par les éléments de combustible à proximité de chacun des détecteurs.

3. Procédé suivant la revendication 1 ou 2, caractérisé en ce que l'on modifie lesdits signaux issus des détecteurs pour compenser la constante de temps de réponse des détecteurs aux changements de puissance.

4. Dispositif de contrôle de la puissance dissipée dans un réacteur nucléaire permettant de mettre en oeuvre le procédé suivant la revendication 1, qui comprend plusieurs détecteurs (12), fournissant des signaux analogiques et une première voie de traitement des signaux analogiques des détecteurs, fournissant une première représentation de précision élevée et comportant un calculateur de processus (64) associé à des moyens de mémorisation(66, 68) fournissant des paramètres de modèle et des facteurs de correction, dispositif caractérisé en ce que les détecteurs sont du type à génération interne de chaleur en réponse au rayonnement gamma dû aux fissions et en ce que le dispositif comprend une seconde voie de traitement de signal qui convertit directement les signaux analogiques en une seconde représentation de puissance (24) en fonction des taux de dissipation de puissance locale dans les éléments de combustible situés à proximité des détecteurs, et des moyens de calibrage en ligne (26, 78) permettant de comparer les deux représentations de puissance et d'ajuster les moyens de conversion des signaux analogiques de la seconde voie de traitement.

5. Dispositif selon la revendication 4, caractérisé en ce que les deux voies de traitement de signal comportent chacune un filtre dynamique (70, 74) de compensation des retards dûs à la réponse lente des détecteurs aux changements de puissance.

## Patentansprüche

1. Verfahren zur Regelung der Leistung eines Kernreaktors nach Leistungsmeßsignalen, die durch Detektoren in Abhängigkeit von in Brennelementengruppen stattfindenden Spaltungen erzeugt werden, bei welchem Verfahren die erwähnten Signale zur gleichen Zeit wie mehrere Parameter des Kernreaktors in der Weise behandelt werden, daß eine erste Darstellung der Leistung erzeugt wird, die genau berechnet wird, jedoch durch ein zufälliges Aussetzen unterbrochen werden kann, dadurch gekennzeichnet, daß Detektoren (12) von der Art verwendet werden, die intern Wärme in Abhängigkeit von der bei den Kernspaltungen erzeugten Gammastrahlung erzeugen, so daß sie von den Detektoren abgegebenen Meßsignale in einem direkten Verhältnis zu der Höhe der linearen Leistungserzeugung der Brennelemente stehen; daß die Signale gleichermaßen einer zweiten Behandlung unterzogen werden, ohne die sich auf die erwähnten Parameter beziehenden Daten zu berücksichtigen, um eine zweite Darstellung der Leistung zu bilden, die dieses Mal kontinuierlich ist und bei Unterbrechungen der ersten genauen Leistungsdarstellung zur Verfügung steht; und daß die sich bei der zweiten Behandlung in Abhängigkeit von der ersten genauen Leistungsdarstellung ergebenden Signale derart geeicht werden, daß die kontinuierliche Darstellung der Leistung korrigiert wird.

2. Verfahren nach Anspruch 1, dadurch gekennzeichnet, daß die erwähnten Signale anfänglich so geeicht werden, daß sie die Höhe der Gammastrahlungserwärmung der Detektoren darstellen, und daß sie derart behandelt werden, daß sie die von den Brennelementen abgegebene Leistung nahe bei jedem der Detektoren darstellen.

3. Verfahren nach Anspruch 1 oder 2, dadurch gekennzeichnet, daß die erwähnten Signale, die von den Detektoren abgegeben werden, so umgewandelt werden, daß die Zeitkonstante der Antwort der Detektoren auf Änderungen der Leistung kompensiert wird.

4. Vorrichtung zur Regelung der Leistung eines Kernreaktors, die die Durchführung des Verfahrens nach Anspruch 1 gestattet, mit mehreren Detektoren (12), die anloge Signale erzeugen, und einem ersten Kanal zur Behandlung der analogen Signale der Detektoren, der eine erste genauere Darstellung liefert, und mit einem Prozeßrechner (64), der an ein Speichermittel (66, 68) angeschlossen ist, die Modellparameter und Korrekturfaktoren liefern, dadurch gekennzeichnet, daß die Detektoren in der Weise ausgebildet sind, daß sie intern Wärme in Abhängigkeit von Gammastrahlung erzeugen, die bei der Kernspaltung entsteht, und daß die Vorrichtung einen zweiten Kanal zur Signalbehandlung, der die analogen Signale direkt in eine zweite Leistungsdarstellung (24) als Funktion der Höhe der örtlichen Leistungserzeugung in den Brennelementen umwandelt, die in der Nähe der Detektoren angeordnet sind, und Mittel (26, 78) zum On-line-Eichen aufweist, die einen Vergleich der beiden Leistungsdarstellungen und eine Einstellung der Mittel zum Umwandeln der analogen Signale des zweiten Behandlungskanals gestatten.

5. Vorrichtung nach Anspruch 4, dadurch gekennzeichnet, daß die beiden Signalbehandlungskanäle jeweils ein dynamisches Filter (70, 74) zum Kompensieren von Verzögerungen aufweisen, die durch eine geringe Ansprechgeschwindigkeit der Detektoren auf Leistungsänderungen zurückzuführen sind.

## Claims

1. A method of monitoring power developed in a nuclear reactor from power measurement signals generated by sensors in response to fissions in groups of fuel elements, method according to which said signals are processed at the same time as a plurality of parameters representing the nuclear reactor whereby a first power read out computed with precision, but prone to be accidentally and intermittently interrupted is produced, characterized in that sensors (12) of the type in which there is an internal heat generation in response to the gamma rays due to fissions are used, whereby the measurement signals from the sensors are in direct relation with the linear power generation rate in the fuel elements, the signals are also subjected to a second processing which does not take into account data in relation with said plurality of other parameters, whereby a second read out of the power is obtained which is continuous and available during the interruptions of the first precision power read out, and the signals from said second processing are calibrated from the first precision power read out whereby the continuous read out of the power may be corrected.

2. Method according to claim 1, characterized in that said signals are initially calibrated to reflect the rate of gamma heating of the sensors and are processed to reflect power generated by the fuel elements adjacent to each of the sensors.

3. Method according to claim 1 or 2, characterized in that the signals from said sensors are modified to compensate for the time constant of the sensors in response to changes in power.

4. Apparatus for monitoring power developed in a nuclear reactor by carrying out the method of claim 1, which comprises a plurality of sensors (12) delivering analogic signals and a first channel for processing the analogic signal from the sensors, delivering a first read out having a high degree of precision and comprising a process computer (64) associated with storing means (66, 68) delivering model parameters and correction factors, said apparatus being characterized in that the sensors are of the type which internally generates heat in response to gamma radiation resulting from fissions and in that said apparatus has a second signal processing channel which directly converts the analogic signal into a second power read out (24) in response to the local power generation rates in the fuel elements adjacent to sensors and in-line calibration means (26, 78) for comparing the two power read outs and for adjusting the analogic signal conversion means of the second processing channel.

5. Apparatus according to claim 4, characterized in that the two signal processing channels each have a dynamic filter (70, 74) for compensating the delays due to the slow response of the sensors to changes in power.

7

0 058 581

## FIG. 1.

VOIE B

CALIBR. — 26    10

DETECT.    TRAITEMENT ANALOG. DIRECT — 14    REPRESENT. DE LA PUISSANCE — 24    ANALYS. — 22

12

CALCUL DE PRECISION    REPRESENT. DE PRECISION DE LA PUISS. — 18

VOIE A    16

SOURCES — 20

## FIG. 2.

SIGNAL

2.5
1.5
1.0

28
30
32

T

## FIG. 3.

SIGNAL

50
48

T

9

FIG. 4.

11

## FIG. 5.

## FIG. 6.